# FASCICULE DE BREVET EUROPEEN

(11) **EP 1 468 236 B1**
(45) Date de publication et mention de la délivrance du brevet: **27.07.2005**
(21) Numéro de dépôt: 03715028.1
(22) Date de dépôt: 20.01.2003
(51) Int. Cl.: F28D 7/02, B01J 19/00

(54) **SERPENTIN DE CIRCULATION D'UN FLUIDE CALOPORTEUR, PROCEDE DE FABRICATION D'UN TEL SERPENTIN ET REACTEUR COMPRENANT UN TEL SERPENTIN**
ROHRSCHLANGE ZUR STRÖMUNG EINES WÄRMETRÄGERMEDIUMS, HERSTELLUNGSVERFAHREN EINER SOLCHEN ROHRSCHLANGE UND EINE SOLCHE ROHRSCHLANGE ENTHALTENDER REAKTOR
COIL FOR COOLANT CIRCULATION, METHOD FOR MAKING SAME AND REACTOR COMPRISING SAME

(30) Priorité: 21.01.2002 FR 0200706
(43) Date de publication de la demande: 20.10.2004
(73) Titulaire: RHODIA POLYAMIDE INTERMEDIATES, 69190 Saint-Fons (FR)
(72) Inventeur: NURIS, Thierry, F-69720 SAINT BONNET DE MURE (FR); THIERRY, Jean-François, F-69340 FRANCHEVILLE (FR)
(74) Mandataire: Myon, Gérard
(86) Numéro de dépôt international: PCT/FR2003/000177
(87) Numéro de publication internationale: WO 2003/062728

(56) Documents cités:
- EP-A- 0 659 476
- GB-A- 2 099 127
- NL-A- 7 900 648
- US-A- 2 875 027
- US-A- 4 371 036

## Description

L'invention a trait à un réacteur pour le traitement d'un milieu visqueux ou pour la réalisation de réactions chimiques en milieu visqueux, telles qu'une polymérisation, un tel réacteur comprenant un serpentin de circulation de fluide caloporteur. L'invention a enfin trait à un procédé de fabrication d'un tel réacteur et à l'utilisation d'un tel réacteur.

EP-A-0 659 476 divulgue un appareil utilisé pour la polymérisation de chlorure de vinyle dans lequel des serpentins de circulation de fluide caloporteur sont utilisés.

Il est connu de réaliser la polymérisation du polyamide de façon continue ou discontinue. Dans les méthodes dites discontinues, on procède par lots avec des réacteurs de type autoclave. Dans ce cas, il est connu d'évaporer l'eau d'une solution aqueuse de deux monomères et l'eau produite par leur polymérisation, grâce à un apport de chaleur externe.

Cet apport de chaleur doit être suffisant pour que la réaction de polymérisation ait lieu dans un intervalle de temps compatible avec les critères de productivité en vigueur dans le monde industriel. L'apport de chaleur ne doit pas être trop important afin d'éviter, autant que faire se peut, d'entraîner l'un des monomères avec la phase vapeur. Si une quantité de monomères est entraînée avec la phase vapeur, cette quantité doit être constante afin que les caractêristiqués du polyamide obtenu soient reproductibles. L'apport de chaleur permet, par ailleurs, de contrôler la réaction de polymérisation, dans la mesure où il permet de piloter l'évaporation de l'eau.

Pour apporter de la chaleur au milieu réactionnel, on a utilisé dans des autoclaves de faible capacité, c'est-à-dire de volume inférieur à 3m³, des serpentins dans lesquels circule un fluide caloporteur.

Pour des réacteurs de capacité plus importante, en particulier de l'ordre de 5 à 6 m³, on a pu envisager d'utiliser un serpentin et un agitateur, ce dernier visant à améliorer l'homogénéité du milieu réactionnel et à augmenter le coefficient de transfert thermique.

Cependant, cette solution n'est pas transposable à des réacteurs de grande capacité, en particulier de capacité supérieure à 8m³, car il n'est pas possible d'augmenter de façon suffisante les surfaces d'échange constituées par les parois du serpentin. En effet, si le diamètre global du serpentin est augmenté, il n'est alors plus possible de loger dans la cuve du réacteur un agitateur efficace. Si l'on diminue le diamètre des tubes constitutifs du serpentin, les pertes de charge liées à la circulation de fluide caloporteur dans ces tubes augmentent de façon significative. Si l'on crée un serpentin avec une forme très élaborée, on entrave la re-circulation axiale du milieu réactionnel et on annule l'effet dit « de pompage » au centre de l'agitateur. Enfin, un serpentin de forme élaborée avec des tubes de faible diamètre ne satisferait pas aux critères de résistance mécaniques lui permettant de résister à une utilisation prolongée et/ou à des incidents de fabrication.

C'est à ces inconvénients qu'entend plus particulièrement remédier l'invention en proposant un nouveau réacteur muni d'un serpentin qui permet un apport de chaleur efficace à un milieu réactionnel de volume important, tout en étant compatible avec les dimensions de la cuve du réacteur et avec un agitateur.

Dans cet esprit, l'invention concerne un réacteur pour le traitement d'un milieu visqueux ou la réalisation de réactions chimiques en milieu visqueux, ce réacteur comprenant une cuve et un serpentin de circulation d'un fluide caloporteur, ce serpentin comportant au moins un segment de tube enroulé selon une génératrice hélicoïdale, caractérisé en ce que le serpentin comprend au moins un second segment de tube enroulé selon une génératrice hélicoïdale, s'étendant en parallèle au premier segment entre un distributeur et un collecteur, ces premier et second segments étant centrés sur un même axe géométrique, cintrés avec sensiblement le même rayon et imbriqués, de telle sorte qu'ils forment ensemble une nappe de forme globalement cylindrique.

Grâce à l'utilisation de deux segments de tube hélicoidaux imbriqués, il est possible que ces segments aient chacun une longueur relativement courte, de telle sorte que la perte de charge qu'ils génèrent est relativement faible, alors même que la section du tube utilisé peut être également faible. En outre, le fait que les segments de tube hélicoidaux ont une longueur relativement courte induit que leur pente peut être relativement importante, c'est-à-dire plus importante que dans le cas d'un unique segment circulaire s'étendant sur toute la hauteur du serpentin. Ainsi, dans le cas où le fluide caloporteur est alimenté en phase vapeur pouvant se condenser dans les tubes, l'écoulement du fluide condensé dans ces segments est plus rapide, d'où un risque moins important d'accumulation de condensats et un encombrement moindre en liquide. Le fait que ces segments forment une nappe cylindrique évite qu'ils ne perturbent de façon significative l'écoulement ou la re-circulation du milieu réactionnel dans la partie centrale d'un réacteur.

Selon un premier aspect avantageux et non obligatoire de l'invention, le serpentin comprend une seconde nappe, formée d'au moins un segment de tube enroulé selon une génératrice hélicoïdale, s'étendant entre le distributeur et le collecteur et centré sur l'axe des premiers segments hélicoïdaux, cette seconde nappe étant de forme globalement cylindrique, avec un rayon inférieur au rayon de la première nappe. Dans ce cas, la seconde nappe est avantageusement formée par au moins deux segments de tube, hélicoïdaux, imbriqués et s'étendant en parallèle entre le distributeur et le collecteur.

Selon d'autres aspects avantageux mais non obligatoires de l'invention, le serpentin du réacteur incorpore une ou plusieurs des caractéristiques suivantes :
- La première nappe est formée par trois segments de tube hélicoïdaux imbriqués.
- Les segments hélicoïdaux ont sensiblement la même longueur et/ou induisent sensiblement la même perte de charge à l'écoulement du fluide caloporteur; entre le distributeur et le collecteur.
- Il est prévu un tube qui s'étend, selon une direction globalement parallèle à l'axe de la première nappe, entre les première et seconde nappes, ce tube étant raccordé, soit au distributeur, soit au collecteur.
- Le distributeur et/ou le collecteur sont en forme de tore et centrés sur l'axe de la première nappe. Dans ce cas, on peut prévoir, que le distributeur et/ou le collecteur sont cintrés avec un rayon sensiblement égal au rayon de la première nappe ou, éventuellement, de la seconde nappe, de sorte qu'ils sont sensiblement dans le prolongement de cette première nappe ou, éventuellement, de cette seconde nappe.

L'invention concerne également un procédé de fabrication d'un réacteur tel que précédemment décrit et, plus spécifiquement un procédé qui comprend une étape consistant à imbriquer deux segments de tube enroulés selon des génératrices hélicoïdales et cintrés avec sensiblement le même rayon, de façon à former une nappe de forme globalement cylindrique.

On imbrique avantageusement les segments de tube par un mouvement de « vissage » autour d'un axe géométrique commun à ces segments.

Selon un autre aspect avantageux de l'invention, ce réacteur peut comprendre un agitateur disposé autour ou à l'intérieur du serpentin. L'agitateur peut être suspendu au plafond du réacteur et former une cage entourant le serpentin, l'alimentation et l'évacuation du fluide caloporteur vers ou à partir du serpentin étant effectuées à travers le fond du réacteur. Selon un autre mode de réalisation de l'invention, l'agitateur peut être formé par une vis sans fin centrée sur l'axe géométrique d'une nappe intérieure ou de la nappe unique du serpentin.

Selon un autre aspect avantageux de l'invention, la nappe intérieure ou la nappe unique du serpentin forme un puits central de rayon compris entre 20 et 70%, du rayon de la cuve, ce qui permet une bonne re-circulation du milieu réactionnel dans la cuve. Dans le cas d'un serpentin à deux nappes, le puits central formé par la nappe intérieure a, de préférence, un rayon compris entre 20 et 40% du rayon de la cuve.

L'invention concerne enfin une utilisation d'un réacteur tel que précédemment décrit ayant un volume supérieur à environ 8m³ pour le traitement d'un milieu visqueux ou la préparation de polymères tels que des polyamides, en particulier le polyamide 6-6, ou des polyesters. Cette utilisation peut être mise en oeuvre de façon discontinue, par exemple pour la fabrication de lots de polymères de volume important, ou de façon continue.

L'invention sera mieux comprise et d'autres avantages de celle-ci apparaîtront plus clairement à la lumière de la description qui va suivre d'un mode de réalisation d'un serpentin et d'un réacteur conformes à l'invention, de leur fabrication et utilisation respectives, donnée uniquement à titre d'exemple et faite en référence aux dessins annexés dans lesquels :
- la figure 1 est une coupe longitudinale de principe d'un réacteur conforme à l'invention équipé d'un serpentin conforme à l'invention ;
- la figure 2 est une demi-coupe du serpentin représenté sur la figure 1 ;
- la figure 3 est une représentation schématique de principe d'une étape de fabrication du serpentin de la figure 2 ;
- la figure 4 est une vue analogue à la figure 3 pour une autre étape de fabrication du serpentin ;
- la figure 5 est une vue de dessus du serpentin de la figure 2 ;
- la figure 6 est une vue de dessous du serpentin de la figure 2 et
- la figure 7 est une vue en perspective du serpentin des figures 2 à 6.

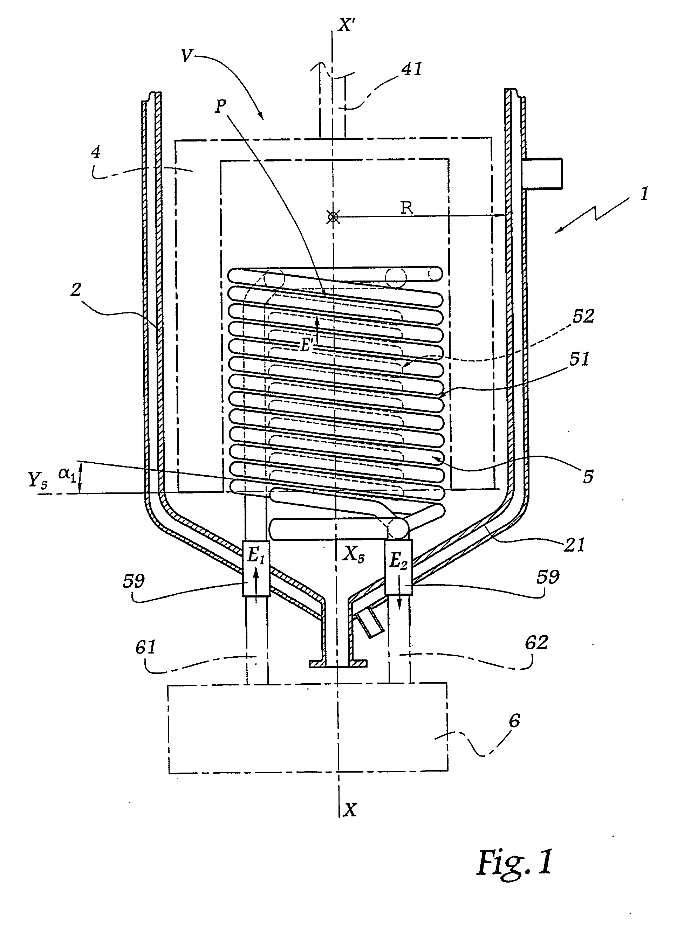

Le réacteur 1 représenté à la figure 1 est utilisé pour la polymérisation de polyamide. Il a un volume V de l'ordre de 11 m³. Ce réacteur 1 comprend une cuve 2 de forme globalement cylindrique avec un fond 21 globalement tronconique. Un couvercle non représenté est prévu pour être monté sur la cuve 2 afin d'en constituer le plafond et d'isoler de façon étanche le volume intérieur V du réacteur 1 par rapport au milieu ambiant.

Un agitateur 4 est prévu dans le volume V. Il est entraîné par un arbre 41 aligné sur un axe central X-X' du réacteur et traversant le couvercle. L'agitateur 4 comprend des pales globalement hélicoïdales montées sur une cage qui entoure un serpentin 5. Pour la clarté du dessin l'agitateur 4 est silhouetté en traits mixtes uniquement à la figure 1.

D'autres formes d'agitateurs peuvent être envisagées, pour autant qu'elles sont compatibles avec la place disponible dans le volume V.

La cuve 2 est à double enveloppe pour permettre la circulation d'un fluide caloporteur, ceci permettant de chauffer le volume V.

Un serpentin 5 est installé à l'intérieur de la cuve 2 et est alimenté en fluide caloporteur à partir d'un vaporiseur 6 qui peut être de tout type connu. Deux traversées de cloison 59 relient le serpentin 5 à des tubes 61 et 62 permettant respectivement l'alimentation du serpentin 5 en fluide caloporteur chaud et l'évacuation de fluide caloporteur comparativement moins chaud en direction du vaporiseur 6.

Dans le cas d'espèce, le fluide caloporteur est une huile en phase vapeur à une température comprise entre 300 et 350°C. L'huile en phase vapeur se comporte comme un corps pur et travaille en chaleur latente, de sorte qu'elle conserve sa température, si bien que le milieu réactionnel est soumis à un apport calorifique globalement homogène sur la longueur de serpentin.

Les flèches E₁ et E₂ représentent l'écoulement de l'huile dans les traversées de cloison 59.

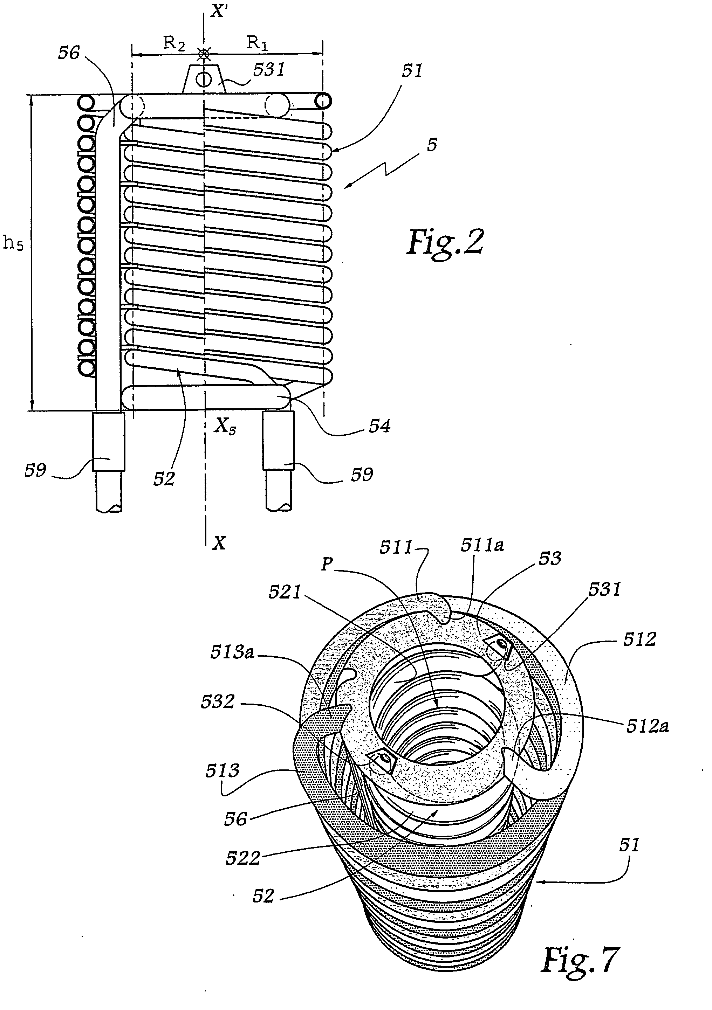

Comme il ressort plus particulièrement des figures 2 à 7, le serpentin 5 est formé de deux nappes de tubes. Plus spécifiquement, une première nappe 51 est formée de tubes cintrés à un rayon R₁ sensiblement constant. Une seconde nappe de tubes 52 est formée de tubes cintrés avec un rayon R₂ inférieur au rayon R₁. Les nappes 51 et 52 sont sensiblement cylindriques et centrées sur un axe central X₅ du serpentin 5, cet axe étant confondu avec l'axe X-X' lorsque le serpentin est installé dans le réacteur 1.

La nappe 51 est formée de trois segments de tube 511, 512 et 513 enroulés chacuns selon une génératrice hélicoïdale et imbriqués les uns dans les autres, c'est-à-dire formant ensemble la nappe 51.

De la même façon, la nappe 52 est formée de deux segments de tube 521 et 522 enroulés chacun selon une génératrice hélicoïdale et imbriqués les uns dans les autres.

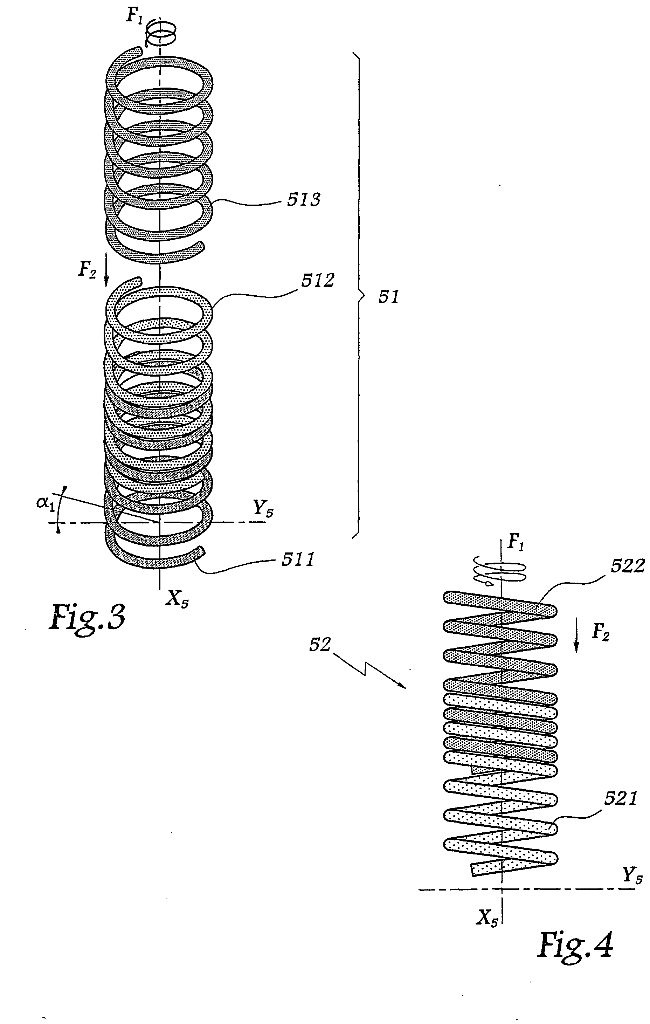

Comme il ressort de la figure 3, la nappe 51 est formée en « vissant » les segments 511, 512 et 513 autour de l'axe X₅ qui est leur axe central commun. La flèche F₁ représente l'imbrication du segment 512 dans le segment 511, cette imbrication se traduisant par une progression du segment 512 parallèlement à l'axe X₅, comme représenté par la flèche F₂. De la même façon, le segment 513 peut être imbriqué entre les segments 511 et 512.

Comme cela ressort de la figure 4, la nappe 52 est formée du segment 522 imbriqué dans le segment 521 grâce à un mouvement de vissage représenté par les flèches F₁ et F₂.

Lorsque les deux nappes 51 et 52 sont conformées chacune avec une forme globalement cylindrique et avec un rayon R₁ ou R₂ pré-défini, il est possible de relier les segments de tube 511 à 513, 521 et 522 à une nourrice d'alimentation 53 formant distributeur et à un collecteur de sortie 54, cette nourrice et ce collecteur étant chacun de forme globalement torique et centrés sur l'axe X₅.

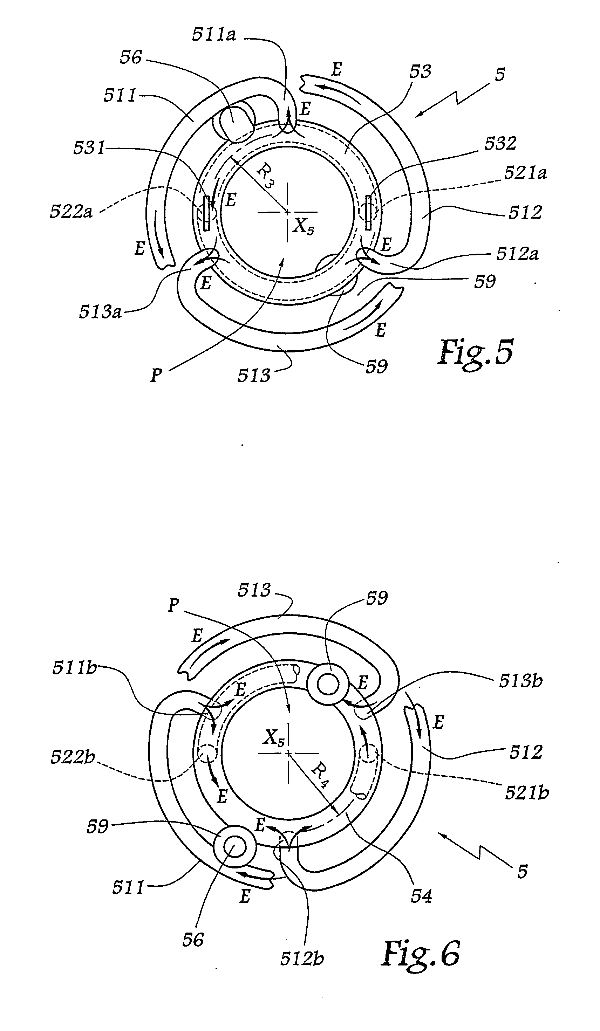

Les éléments 53 et 54 ont un diamètre supérieur à celui des segments de tube 511 à 513, 521 et 522, de sorte qu'ils permettent d'alimenter efficacement ces segments en fluide caloporteur et de collecter efficacement le fluide provenant de ces segments, comme ceci est représenté par les flèches d'écoulement E aux figures 5 et 6.

Le rayon R₃ du tore formé par la nourrice 53 est choisi égal au rayon R₂ , de même que le rayon R₄ du collecteur de sortie 54. Ainsi, les éléments 53 et 54 sont globalement alignés avec la nappe 52, de telle sorte qu'ils ne perturbent pas un écoulement dans la partie centrale du serpentin 5, cet écoulement étant représenté par la flèche E' à la figure 1.

La nourrice 53 est pourvue de deux oreilles de levage 531 et 532 permettant de supporter le serpentin 5 lors de sa mise en place dans la cuve 2 ou lors de son extraction. D'autres moyens de levage peuvent être envisagés, sur la nourrice 53 ou sur d'autres parties du serpentin 5.

Un tube 56 globalement parallèle à l'axe X₅, est logé entre les nappes 51 et 52, ce tube permettant d'alimenter la nourrice 53 à partir de la traversée de cloison 59 reliée au tube 61 du vaporisateur 6. Ce tube 56 a une section interne sensiblement égale à celle de la nourrice 53.

Comme il ressort plus particulièrement de la figure 5, les trois segments de tube 511, 512 et 513 sont reliés à la nourrice 53 par des piquages 511a, 512a et 513a s'étendant selon une direction essentiellement radiale par rapport à la nourrice 53. Par ailleurs, les tubes 521 et 522 sont reliés à cette nourrice 53 par des piquages 521a et 522a s'étendant en dessous de la nourrice 53, c'est-à-dire selon une direction globalement parallèle à l'axe X₅, alors que les piquages 511a, 512a et 513a sont globalement perpendiculaires à cet axe.

De la même façon et comme il ressort de la figure 6, les tubes 511 à 513 sont reliés par des piquages 511b, 512b et 513b essentiellement radiaux au collecteur 54, alors que les tubes 521 et 522 sont reliés au collecteur 54 par des piquages essentiellement axiaux 521b et 522b.

On peut choisir les rayons R₁ et R₂, la hauteur h₅ du serpentin 5 et le positionnement des éléments 53 et 54, de telle sorte que les segments de tube 511 à 513, 521 et 522 aient sensiblement la même longueur. Ces segments ont la même section interne. Ils induisent alors sensiblement la même perte de charge sur l'écoulement de fluide caloporteur.

Au vu de ce qui précède, on comprend que les segments 511, 512, 513, 521 et 522 sont montés en parallèle les uns par rapport aux autres entre les éléments 53 et 54, ce qui permet d'obtenir des pertes de charges relativement peu importantes en tenant compte, en particulier, du fait que la perte de charge globale des trois tubes 511, 512 et 513 est sensiblement plus faible que celle qui serait générée par un unique tube en configuration hélicoïdale formant à lui seul une nappe aussi dense que la nappe 51.

En outre, la pente unitaire de chacun des tubes 511 à 513, qui peut être définie, comme illustré aux figures 1 et 3, par l'angle α₁ entre un tube et une normale Y₅ à l'axe 5, est sensiblement plus importante que la pente qu'aurait un unique tube configuré en hélice pour constituer à lui seul la nappe 51. Ceci diminue fortement les risques d'accumulation de condensats à l'intérieur des segments 511 à 513 et minimise la rétention en liquide dans la partie inférieure de ces tubes.

Les observations qui précèdent valent également pour les tubes 521 et 522 de la seconde nappe 52.

Comme le tube 56 s'étend selon une direction globalement parallèle à l'axe X-X' de la cuve 2, il ne perturbe pas sensiblement l'écoulement E' du milieu réactionnel.

En pratique on choisit le rayon R₂ de la nappe intérieure 52 avec une valeur comprise entre 20 et 40% du rayon R de la cuve 2. Dans ces conditions, le puits central P formé par la nappe 52 dans le volume V du réacteur 1 est suffisamment large pour que la re-circulation de milieu réactionnel générée par l'agitateur 4 soit efficace.

On note également que la construction du serpentin 5 permet que sa géométrie soit adaptée à celle du fond 21 de la cuve 2, de sorte que le volume mort du réacteur 1, c'est-à-dire sa partie où il se crée peu de re-circulation, est limité au maximum.

L'invention a été représentée avec un serpentin 5 comprenant une nappe externe 51 et une nappe interne 52. Elle est cependant applicable avec un serpentin comprenant une unique nappe composée d'au moins deux segments de tube imbriqués avec une configuration hélicoïdale.

Dans le cas d'un serpentin comprenant une seule nappe, le rayon de cette nappe peut être choisi avec une valeur comprise entre 20 et 70% du rayon de la cuve de réacteur.

L'invention a été représentée avec la nappe externe 51 comprenant trois segments de tube 511, 512 et 513. Elle est cependant applicable avec une nappe comprenant deux segments ou, au contraire, plus de trois segments.

L'invention a été représentée avec un agitateur 4 disposé autour du serpentin 5. Elle est cependant également applicable avec un agitateur qui pénétrerait dans le puits central du serpentin 5. Dans ce cas, les rayons R₁ et R₂ du serpentin 5 pourraient être augmentés et l'agitateur pourrait avoir la forme d'une vis sans fin.

L'invention est indépendante du type exact du vaporisateur 6 et de la nature du fluide caloporteur utilisé.

Sur les figures 3, 4 et 7, des trames différentes ont été utilisées uniquement pour différencier visuellement les différentes parties du serpentin 5.

## Revendications

1. Réacteur pour le traitement d'un milieu visqueux ou la réalisation de réactions chimiques en milieu visqueux, ledit réacteur comprenant une cuve et un serpentin de circulation d'un fluide caloporteur, ledit serpentin comprenant au moins un premier segment de tube enroulé selon une génératrice hélicoïdale et au moins un second segment de tube (512, 513) enroulé selon une génératrice hélicoïdale et s'étendant en parallèle audit premier segment (511) entre un distributeur (53) et un collecteur (54), **caractérisé en ce que** lesdits premier et second segments étant centrés sur un même axe géométrique (X₅), cintrés avec sensiblement le même rayon (R₁) et imbriqués, de telle sorte qu'ils forment ensemble une nappe (51) de forme globalement cylindrique.

2. Réacteur selon la revendication 1, **caractérisé en ce que** ledit serpentin comprend une seconde nappe (52) formée d'au moins un segment de tube (521, 522) enroulé selon une géométrie hélicoïdale, s'étendant entre ledit distributeur (53) et ledit collecteur (54) et centré sur ledit axe (X₅), ladite seconde nappe étant de forme globalement cylindrique, avec un rayon (R₂) inférieur au rayon (R₁) de la première nappe (51).

3. Réacteur selon la revendication 2, **caractérisé en ce que** ladite seconde nappe (52) est formée par au moins deux segments de tubes (521, 522) enroulés selon des génératrices hélicoïdales, imbriqués et s'étendant en parallèle entre ledit distributeur (53) et ledit collecteur (54).

4. Réacteur selon l'une des revendications précédentes, **caractérisé en ce que** ladite première nappe (51) est formée par trois segments de tube (511, 512, 513) enroulés selon des génératrices hélicoïdales et imbriqués.

5. Réacteur selon l'une des revendications précédentes, **caractérisé en ce que** lesdits segments (511, 512, 513, 521, 522) ont sensiblement la même longueur et/ou induisent sensiblement la même perte de charge à l'écoulement dudit fluide caloporteur, entre ledit distributeur (53) et ledit collecteur (54).

6. Réacteur selon l'une des revendications précédentes, **caractérisé en ce que** ledit serpentin comprend un tube (56) s'étendant, selon une direction globalement parallèle audit axe (X₅), entre lesdites première (51) et seconde (52) nappes, ledit tube étant raccordé soit audit distributeur (53), soit audit collecteur (54).

7. Réacteur selon l'une des revendications précédentes, **caractérisé en ce que** ledit distributeur (53) et/ou ledit collecteur (54) sont en forme de tore et centrés sur ledit axe (X₅).

8. Réacteur selon la revendication 7, **caractérisé en ce que** ledit distributeur (53) et/ou ledit collecteur (54) sont cintrés avec un rayon (R₃, R₄) sensiblement égal au rayon (R₂) de ladite première nappe (51) ou, éventuellement, de ladite seconde nappe (52), de sorte qu'ils sont sensiblement dans le prolongement, de ladite première nappe ou, éventuellement, de ladite seconde nappe.

9. Réacteur selon l'une des revendications précédentes, **caractérisé en ce qu'**il comprend un agitateur (4) disposé autour ou à l'intérieur dudit serpentin (5).

10. Réacteur selon la revendication 9, **caractérisé en ce que** ledit agitateur est suspendu au plafond dudit réacteur (1) et forme une cage entourant ledit serpentin (5), l'alimentation et l'évacuation (56, 59, 61, 62) du fluide caloporteur vers ou à partir dudit serpentin étant effectuées à travers le fond (21) dudit réacteur.

11. Réacteur selon la revendication 9, **caractérisé en ce que** ledit agitateur est formé par une vis sans fin centrée sur l'axe géométrique (X₅) d'une nappe intérieure (52) ou de la nappe unique (51) dudit serpentin (5).

12. Réacteur selon l'une des revendications précédentes, **caractérisé en ce que** la nappe intérieure (52) ou la nappe unique (51) dudit serpentin forme un puits central (P) de rayon (R₂) compris entre 20 et 70% du rayon (R) de ladite cuve (2), de préférence compris entre 20 et 40% dudit rayon dans le cas d'une nappe intérieure.

13. Procédé de fabrication d'un réacteur pour le traitement d'un milieu visqueux ou la réalisation de réactions chimiques en milieu visqueux, ledit réacteur comprenant une cuve et un serpentin de circulation d'un fluide caloporteur, ledit serpentin comprenant au moins un segment de tube enroulé selon une génératrice hélicoïdale, **caractérisé en ce qu'**il comprend une étape consistant à imbriquer (F₁, F₂) ledit segment (511) avec au moins un second segment de tube (512, 513) enroulé selon une génératrice hélicoïdale cintré avec sensiblement le même rayon (R₁) que le premier segment, de façon à former une nappe (51) de forme globalement cylindrique.

14. Procédé selon la revendication 13, **caractérisé en ce qu'**on imbrique lesdits segments par un mouvement de vissage (F₁ , F₂) autour d'un axe géométrique commun (X₅) auxdits segments.

15. Utilisation d'un réacteur (1) de volume (V) supérieur à environ 8m³ selon l'une des revendications 1 à 12 pour le traitement d'un milieu visqueux.

16. Utilisation selon la revendication 15 pour la réalisation d'une réaction de polymérisation en milieu visqueux.

## Patentansprüche

1. Reaktor für die Behandlung eines viskose Mediums oder für die Durchführung von chemischen Reaktionen in einem viskosen Medium, wobei der Reaktor ein Gefäß und eine Rohrschlange für die Zirkulation eines Kühlfluids umfasst, wobei die Rohrschlange mindestens ein erstes Rohrsegment, das entsprechend einer spiralförmigen Mantellinie gewickelt ist und mindestens ein zweites Rohrsegment (512, 513) umfasst, das entsprechend einer spiralförmigen Mantellinie gewickelt ist und sich parallel zu dem ersten Segment (511) zwischen einem Verteiler (53) und einem Kollektor (54) erstreckt, **dadurch gekennzeichnet, dass** das erste und zweite Segment zu einer gemeinsamen Achse (X₅) axial ausgerichtet, mit etwa dem gleichen Radius (R₁) gebogen und verschachtelt sind, derart, dass sie zusammen einen Mantel (51) in einer insgesamt gesehenen zylindrischen Form bilden.

2. Reaktor nach Anspruch 1, **dadurch gekennzeichnet, dass** die Rohrschlange einen zweiten Mantel (52) umfasst, der aus mindestens einem Rohrsegment (521, 522) gebildet ist, das entsprechend einer spiralförmigen Geometrie gewickelt ist, sich zwischen dem Verteiler (53) und dem Kollektor (54) erstreckt und zu der Achse (X₅) zentriert ist, wobei der zweite Mantel eine insgesamt gesehene zylindrische Form mit einem Radius (R₂), der kleiner als der Radius (R₁) des ersten Mantels (51) ist, aufweist.

3. Reaktor nach Anspruch 2, **dadurch gekennzeichnet, dass** der zweite Mantel (52) aus mindestens zwei Rohrsegmenten (521, 522) gebildet ist, die entsprechend spiralförmiger Mantellinien gewickelt, und verschachtelt sind und sich parallel zwischen dem Verteiler (53) und dem Kollektor (54) erstrecken.

4. Reaktor nach einem der vorhergehenden Ansprüche, **dadurch gekennzeichnet, dass** der erste Mantel (51) aus drei Rohrsegmenten (511, 512, 513) gebildet ist, die entsprechend spiralförmiger Mantellinien gewickelt und verschachtelt sind.

5. Reaktor nach einem der vorhergehenden Ansprüche, **dadurch gekennzeichnet, dass** die Segmente (511, 512, 513, 521, 522) zwischen dem Verteiler (53) und dem Kollektor im wesentlichen die gleiche Länge aufweisen und/oder im wesentlichen den gleichen Druckverlust der Strömung des Kühlfluids induzieren.

6. Reaktor nach einem der vorhergehenden Ansprüche, **dadurch gekennzeichnet, dass** die Rohrschlange ein Rohr (56) umfasst, das sich zwischen dem ersten (51) und dem zweiten (52) Mantel in einer insgesamt gesehenen, zu der Achse (X₅) parallelen Richtung erstreckt, wobei das Rohr entweder an den Verteiler (53) oder an den Kollektor (54) angeschlossen ist.

7. Reaktor nach einem der vorhergehenden Ansprüche, **dadurch gekennzeichnet, dass** der Verteiler (53) und/oder der Kollektor (54) die Form eines Toroids aufweisen und zu der Achse (X₅) zentriert sind.

8. Reaktor nach Anspruch 7, **dadurch gekennzeichnet, dass** der Verteiler (53) und/oder der Kollektor (54) mit einem Radius (R₃, R₄), der im wesentlichen gleich dem Radius (R₂) des ersten Mantels (51) oder gegebenenfalls des zweiten Mantels (52) ist, axial ausgerichtet sind, derart, dass sie im wesentlichen in der Verlängerung des ersten Mantels oder gegebenenfalls des zweiten Mantels liegen.

9. Reaktor nach einem der vorhergehenden Ansprüche, **dadurch gekennzeichnet, dass** er einen um die Rohrschlange (5) oder im Inneren derselben angeordneten Rührer (4) aufweist.

10. Reaktor nach Anspruch 9, **dadurch gekennzeichnet**, das der Rührer an der Decke des Reaktors (1) aufgehängt ist und einen die Rohrschlange (5) umgebenden Käfig bildet, wobei die Versorgung oder der Ablauf (56, 59, 61, 61) des Kühlfluids zu oder aus der Rohrschlange durch den Boden (21) des Reaktors durchgeführt wird.

11. Reaktor nach Anspruch 9, **dadurch gekennzeichnet, dass** der Rührer als Schneckenrührer ausgebildet ist, der zu der geometrischen Achse (X₅) eines Innenmantels (52) oder des einzigen Mantels (51) der Rohrschlange (5) zentriert ist.

12. Reaktor nach einem der vorhergehenden Ansprüche, **dadurch gekennzeichnet, dass** der innere Mantel (52) oder der einzige Mantel (51) der Rohrschlange einen zentralen Brunnen (P) mit einem Radius (R₂) bildet, der zwischen 20 und 70 % des Radius im Falle eines Innenmantels liegt.

13. Verfahren zur Herstellung eines Reaktors für die Behandlung eines viskosen Mediums oder die Durchführung von chemischen Reaktionen in einem viskosen Medium, wobei der Reaktor ein Gefäß und eine Rohrschlange für die Zirkulation eines Kühlfluids umfasst, wobei die Rohrschlange mindestens ein Rohrsegment aufweist, das entsprechend einer spiralförmigen Mantellinie gewickelt ist, **dadurch gekennzeichnet, dass** es einen Schritt umfasst, der darin besteht, das Segment (511) mit mindestens einem zweiten Rohrsegment (512, 513) zu verschachteln (F₁, F₂), das entsprechend einer spiralförmigen Mantellinie gewickelt und mit im wesentlichen dem gleichen Radius (R₁) wie das erste Segment gebogen ist, derart, dass ein Mantel (51) mit insgesamt gesehen zylindrischer Form gebildet wird.

14. Verfahren nach Anspruch 13, **dadurch gekennzeichnet, dass** die Segmente durch eine Schraubenbewegung (F₁, F₂) um eine den zwei Segmenten gemeinsame geometrische Achse (X₅). verschachtelt werden.

15. Verwendung eines Reaktors (1) mit einem Volumen (V) größer als ungefähr 8m³ nach einem der Ansprüche 1 bis 12 für die Behandlung eines viskosen Mediums.

16. Verwendung nach Anspruch 15 für die Durchführung einer Polymerisationsreaktion in einem viskosen Medium.

## Claims

1. Reactor for treating a viscous medium or implementing chemical reactions in a viscous medium, said reactor comprising a vessel and a coil for circulation of a heat exchanging fluid, said coil comprising at least one first tube segment which is coiled according to a helicoidal generator and at least one second tube segment (512, 513) which is coiled according to a helicoidal generator and extends in parallel to said first segment (511) between a distributor (53) and a collector (54), **characterised in that** said first and second segments are centred on the same geometric axis (X₅), curved with substantially the same radius (R₁) and interlaced, such that together they form a sheet (51) of an overall cylindrical form.

2. Reactor according to claim 1, **characterised in that** said coil comprises a second sheet (52) which is formed by at least one tube segment (521, 522) which is coiled according to a helicoidal geometry, extends between said distributor (53) and said collector (54) and is centred on said axis (X₅), said second sheet being of an overall cylindrical form, with a radius (R₂) less than the radius (R₁) of the first sheet (51).

3. Reactor according to claim 2, **characterised in that** said second sheet (52) is formed by at least two tube segments (521, 522) which are coiled according to helicoidal generators, are interlaced and extend in parallel between said distributor (53) and said collector (54).

4. Reactor according to one of the preceding claims, **characterised in that** said first sheet (51) is formed by three tube segments (511, 512, 513) which are coiled according to helicoidal generators, and are interlaced.

5. Reactor according to one of the preceding claims, **characterised in that** said segments (511, 512, 513, 521, 522) have substantially the same length and/or cause substantially the same head loss in the flow of said heat exchanging fluid, between said distributor (53) and said collector (54).

6. Reactor according to one of the preceding claims, **characterised in that** said coil comprises a tube (56) which extends, according to a direction which is overall parallel to said axis (X₅), between said first (51) and second (52) sheets, said tube being connected either to said distributor (53) or to said collector (54).

7. Reactor according to one of the preceding claims, **characterised in that** said distributor (53) and/or said collector (54) have the form of a toroid and are centred on said axis (X₅).

8. Reactor according to claim 7, **characterised in that** said distributor (53) and/or said collector (54) are curved with a radius (R₃, R₄) which is substantially equal to the radius (R₂) of said first sheet (51) or, possibly, of said second sheet (52), such that they are substantially in the extension of said first sheet or, possibly, of said second sheet.

9. Reactor according to one of the preceding claims, **characterised in that** it includes an agitator (4) which is disposed around or in the interior of said coil (5).

10. Reactor according to claim 9, **characterised in that** said agitator is suspended from the top of said reactor (1) and forms a cage surrounding said coil (5), the supply and the discharge (56, 59, 61, 62) of the heat exchanging fluid towards or from said coil being effected through the base (21) of said reactor.

11. Reactor according to claim 9, **characterised in that** said agitator is formed by an endless screw which is centred on the geometric axis (X₅) of an interior sheet (52) or of the single sheet (51) of said coil (5).

12. Reactor according to one of the preceding claims, **characterised in that** the interior sheet (52) or the single sheet (51) of said coil forms a central well (P) of a radius (R₂) between 20 and 70% of the radius (R) of said vessel (2), preferably between 20 and 40% of said radius in the case of an interior sheet.

13. Method for producing a reactor for treating a viscous medium or implementing chemical reactions in a viscous medium, said reactor including a vessel and a coil for circulation of a heat exchanging fluid, said coil comprising at least one tube segment which is coiled according to a helicoidal generator, **characterised in that** it includes a stage comprising interlacing (F₁, F₂) said segment (511) with at least one second tube segment (512, 513) which is coiled according to a helicoidal generator curved with substantially the same radius (R₁) as the first segment, so as to form a sheet (51) of an overall cylindrical form.

14. Method according to claim 13, **characterised in that** said segments are interlaced by a screwing movement (F₁, F₂) about a geometric axis (X₅) which is common to said segments.

15. Use of a reactor (1) with a volume (V) greater than approximately 8 m³ according to one of the claims 1 to 12 for treating a viscous medium.

16. Use according to claim 15 for implementing a polymerisation reaction in a viscous medium.
